(19) Europäisches Patentamt
European Patent Office
Office européen des brevets

(11) EP 3 255 189 B1

(12) EUROPEAN PATENT SPECIFICATION

(45) Date of publication and mention of the grant of the patent:
**15.08.2018 Bulletin 2018/33**

(21) Application number: **16173184.9**

(22) Date of filing: **06.06.2016**

(51) Int Cl.:
***D04H 1/4291*** *(2012.01)*
***C08L 23/12*** *(2006.01)*
***D04H 1/544*** *(2012.01)*
***D04H 1/56*** *(2006.01)*
***D04H 3/007*** *(2012.01)*
***D04H 3/16*** *(2006.01)*
***D01D 5/098*** *(2006.01)*
***D01F 6/46*** *(2006.01)*

(54) **MELT BLOWN WEB WITH GOOD WATER BARRIER PROPERTIES**

SCHMELZGEBLASENE BAHN MIT GUTEN WASSERBARRIEREEIGENSCHAFTEN

BANDE DE FUSION-SOUFFLAGE AVEC DE BONNES PROPRIÉTÉS DE PROTECTION CONTRE L'EAU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**13.12.2017 Bulletin 2017/50**

(73) Proprietor: **Borealis AG**
**1220 Vienna (AT)**

(72) Inventors:
- **WANG, Jingbo**
  **4209 Engerwitzdorf (AT)**
- **DOSHEV, Petar**
  **4040 Linz (AT)**
- **TYNYS, Antti**
  **4020 Linz (AT)**
- **FIEBIG, Joachim**
  **4209 Engerwitzdorf (AT)**

(74) Representative: **Maiwald Patent- und Rechtsanwaltsgesellschaft mbH**
**Elisenhof**
**Elisenstraße 3**
**80335 München (DE)**

(56) References cited:
**EP-A1- 2 325 248**
**WO-A1-01/48041**
**US-A1- 2005 165 173**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 255 189 B1

## Description

The present invention is directed to a melt blown fiber comprising a polypropylene composition; said composition comprises two polypropylenes which differ in the melt flow rate $MFR_2$. The invention is further directed to a melt-blown web comprising said fiber.

The non-woven polypropylene webs are widely used as barrier layers in the hygiene field and filtration media industry. One of the main requirements of the barrier layers is the barrier property, measured as the hydrohead of the web. A high hydrohead is welcome, meaning better barrier properties at similar web weight, or reduced web weight but similar barrier properties can be achieved. This means in turn reduced consumption of materials thereby reducing costs and $CO_2$ footprint. Further the air permeability should be rather low.

In the field of non-woven polypropylene webs, polypropylenes obtained in the presence of Ziegler-Natta catalysts are widely used. In order to narrow the molecular weight distribution and to increase the melt flow rate, the thus obtained polymers are visbroken which, however, generates the problem of unfavourable odour. Another disadvantage is the production of oligomers which might lead to difficulties in the hygiene field. Further, the formation of shots during the production of the web drastically reduces the barrier properties.

EP 2 325 248 is directed to a polypropylene composition which enables the production of very thin melt blown fibers which is achieved by a composition comprising a polypropylene with a melt flow rate above 400 g/10 min and a further polypropylene having a melt flow rate below 25 g/10 min.

US 2005/0165173 describes highly extensible fibers and nonwoven materials comprising a polypropylene composition which is bimodal regarding melt flow rate and melting temperature.

WO 01/48041 discloses propylene polymers having an ultra high melt flow rate and a process for preparing said propylene polymers.

One approach to solve this problem is the application of polymer materials produced in the presence of single site catalysts which leads to a narrower molecular weight distribution as well as a high melt flow rate. However, the barrier properties are relative low.

Thus the object of the present invention is to provide a material which is suitable for producing a melt blown web with high hydrohead and low air permeability.

The finding of the present invention is to provide a melt blown fiber based a polypropylene composition which comprises two polypropylenes which differ in their molecular weight and thus also in the melt flow rate.

Accordingly, the present invention is directed to a melt blown fiber (MBF) comprising a polypropylene composition (PC) comprising

a) a first polypropylene (PP1) having a melt flow rate $MFR_2$ (230 °C) measured according to ISO 1133 in the range of 1,500 to 10,000 g/10 min and
b) a second polypropylene (PP2),

wherein the first polypropylene (PP1) has a higher melt flow rate than the second polypropylene (PP2),
and wherein further
the ratio of the melt flow rate $MFR_2$ measured according to ISO 1133 of the mixture (M) consisting of the first polypropylene (PP1) and the second polypropylene (PP2) to the melt flow rate $MFR_2$ (230 °C) measured according to ISO 1133 of the first polypropylene (PP1) [$MFR_2$(M)/$MFR_2$(PP1)] is in the range of 0.08 to 0.62,
and wherein the amount of the first polypropylene (PP1) and the second polypropylene (PP2) together makes up at least 80 wt.-% of the melt blown fiber (MBF).

According to one embodiment of the present invention, the first polypropylene (PP1) has a weight average molecular weight Mw in the range of 35 to 75 kg/mol and/or a melt flow rate $MFR_2$ (230 °C) measured according to ISO 1133 of at least 1,000 g/10min.

Preferably the mixture (M) has a weight average molecular weight Mw in the range of 50 to 110 kg/mol.

According to another embodiment of the present invention, the polypropylene composition (PC) has

a) a weight average molecular weight Mw in the range of 50 to 110 kg/mol;
and/or
b) a melt flow rate $MFR_2$ (230 °C) measured according to ISO 1133 of at least 650 g/10min.

According to a further embodiment of the present invention, the amount of the first polypropylene (PP1) and the second polypropylene (PP2) and/or the amount of the mixture (M) together makes up at least 80 wt.-% of the polypropylene composition (PC).

According to still another embodiment of the present invention, the amount of the polypropylene composition (PC) makes up at least 80 wt.-% of the melt blow fiber (MBF).

According to one embodiment of the present invention, the weight ratio between the first polypropylene (PP1) and the second polypropylene (PP2) [wt.-% (PP1)/wt.-% (PP2)] is in the range of 0.05 to 1.90.

It is especially preferred that the ratio of the weight average molecular weight Mw of the mixture (M) to the weight average molecular weight Mw of the first polypropylene (PP1) [Mw(M)/Mw(PP1)] is in the range of 0.7 to 3.1.

According to another embodiment of the present invention, the mixture (M) and/or the polypropylene composition (PC) has/have

a) a molecular weight distribution (Mw/Mn) in the range of 2.0 to 10.0;
and/or
(b) the first polypropylene (PP1) has a molecular weight distribution (Mw/Mn) in the range of 2.0 to 8.0.

According to a further embodiment of the present invention, the mixture (M) and/or the polypropylene composition (PC) has/have

a) a comonomer content in the range of 0.1 to 6.0 wt-%;
and/or
b) a melting temperature Tm of at least 120 °C.

According to another embodiment of the present invention, the polypropylene composition (PC) has a xylene cold soluble (XCS) fraction in the range of 1.0 to 10.0 wt.-%

Further, it is especially preferred that the weight average molecular weight Mw of the second polypropylene (PP2) is higher than the weight average molecular weight Mw of the first polypropylene (PP1), preferably the weight average molecular weight Mw of the second polypropylene (PP2) is in the range of 90 to 215 kg/mol.

According to one embodiment of the present invention, the second polypropylene (PP2) has a melt flow rate $MFR_2$ (230 °C) measured according to ISO 1133 in the range of 50 to 650 g/10 min and/or a comonomer content of more than 2.0 to 8.0 wt-%.

According to a further embodiment of the present invention, the first polypropylene (PP1) has

a) a comonomer content of at most 3.0 wt-%;
and/or
b) a xylene cold soluble (XCS) fraction in the range of 1.0 to 5.0 wt.-%.

According to still another embodiment of the present invention, the fibers have an average diameter of 0.3 to 5.0 μm.

In addition, the present invention is directed to a melt-blown web (MBW) comprising melt blow fibers (MBF) as defined above and in more detail below.

It is especially preferred that the melt-blown web (MBW) has a weight per unit area of at most 120 g/$m^2$.

Additionally, the invention is directed to an article comprising a melt-blown web (MBW) as defined above and in more detail below wherein article is selected from the group consisting of filtration medium, diaper, sanitary napkin, panty liner, incontinence product for adults, protective clothing, surgical drape, surgical gown, and surgical wear.

In the following the invention will be described in more detail.

**The melt blown fiber (MBF)**

The melt blown fiber (MBF) according to this invention must comprise a polypropylene composition (PC) wherein said polypropylene composition (PC) comprises a first polypropylene (PP1) and a second polypropylene (PP2). The definition of the melt blown fiber (MBF) is also applicable to the sum of melt blown fibers (MBFs) which are produced with the same material comprising the polypropylene composition (PC), preferably which are produced with the same polypropylene composition (PC).

It is preferred that the main component of the melt blown fiber (MBF) is the polypropylene composition (PC). Accordingly, it is preferred that the melt blown fiber (MBF) contains at least 80 wt.-%, more preferably at least 90 wt.-%, still more preferably 95 wt.-% of the polypropylene composition (PC). Thus in one preferred embodiment the melt blown fiber (MBF) consists of the polypropylene composition (PC).

Additionally, it is preferred that the melt blown fiber (MBF) comprises at least 80 wt.-%, more preferably at least 85 wt.-%, yet more preferably at least 90 wt.-%, like at least 95 wt.-%, of the mixture (M), i.e. of the first polypropylene (PP1) and the second polypropylene (PP2) together, based on the total weight of the melt blown fiber (MBF).

Accordingly in one specific embodiment the melt blown fiber (MBF) consists of the polypropylene composition (PC), wherein further preferably the polypropylene composition (PC) consists of the mixture (M), i.e. the mixture of the

first polypropylene (PP1) and the second polypropylene (PP2), and additives (AD), wherein more preferably the amount of the mixture (M), i.e. of the mixture of the first polypropylene (PP1) and the second polypropylene (PP2), is at least 85 wt.-%, yet more preferably at least 90 wt.-%, like at least 95 wt.-%, based on the total weight of the polypropylene composition (PC).

Preferably the melt blown fibers (MBFs) according to the present invention preferably have an average diameter (average filament fineness) in the range of 0.3 to 5.0 μm, more preferably in the range of 0.5 to 4.5 μm, yet more preferably in the range of 0.5 to 4.0 μm.

**The mixture (M) and the polypropylene composition (PC)**

As mentioned above the polypropylene composition (PC) comprises a first polypropylene (PP1) and a second polypropylene (PP2). It is preferred that the first polypropylene (PP1) and the second polypropylene (PP2) together make up the main part of the polypropylene composition (PC). According to this invention the mixture (M) is regarded as a mixture consisting of the first polypropylene (PP1) and the second polypropylene (PP2). Accordingly, in one preferred embodiment the first polypropylene (PP1) and the second polypropylene (PP2) are the only polypropylenes, more preferably the only polymers in the polypropylene composition (PC). Therefore, it is preferred that the polypropylene composition (PC) comprises at least 80 wt.-%, more preferably at least 85 wt.-%, yet more preferably at least 90 wt.-%, like at least 95 wt.-%, of the mixture (M), i.e. of the first polypropylene (PP1) and the second polypropylene (PP2) together, based on the total weight of the polypropylene composition (PC). The remaining part of the polypropylene composition (PC) is typical additives (AD). Thus in a preferred embodiment the polypropylene composition (PC) consists of the mixture (M), i.e. the mixture of the first polypropylene (PP1) and the second polypropylene (PP2), and the additives (AD), wherein more preferably the amount of the mixture (M), i.e. of the mixture of the first polypropylene (PP1) and the second polypropylene (PP2), is at least 85 wt.-%, yet more preferably at least 90 wt.-%, like at least 95 wt.-%, based on the total weight of the polypropylene composition (PC).

As mentioned above the polypropylene composition (PC) comprises the first polypropylene (PP1) and the second polypropylene (PP2). It is preferred that the weight ratio between the first polypropylene (PP1) and the second polypropylene (PP2) [wt.-% (PP1)/wt.-% (PP2)] is in the range of 0.05 to 1.90, more preferably in the range of 0.10 to 1.50, yet more preferably in the range of 0.18 to 1.22.

It is especially preferred that the mixture (M), i.e. the mixture of the first polypropylene (PP1) and the second polypropylene (PP2), has a melt flow rate $MFR_2$ (230 °C) measured according to ISO 1133 of at least 650 g/10min, more preferably in the range of 750 to 3000 g/10min, still more preferably in the range of 850 to 2500 g/10min, like in the range of 950 to 2000 g/10min.

Additionally or alternatively to the previous paragraph it is preferred that the mixture (M), i.e. the mixture of the first polypropylene (PP1) and the second polypropylene (PP2), has a weight average molecular weight Mw in the range of 50 to 110 kg/mol, more preferably in the range of 55 to 100 kg/mol, like in the range of 60 to 95 kg/mol.

Further it is preferred that the mixture (M), i.e. the mixture of the first polypropylene (PP1) and the second polypropylene (PP2), has a molecular weight distribution (Mw/Mn) in the range of 2.0 to 10.0, more preferably in the range of 2.5 to 9.0, like in the range of 2.9 to 8.5.

In a preferred embodiment the information provided for the mixture (M) with regard to the melt flow rate $MFR_2$, the weight average molecular weight Mw as well as to the molecular weight distribution (Mw/Mn) is also applicable for the polypropylene composition (PC). This holds in particular true in case the polypropylene composition (PC) consists of the mixture (M) and optional additives (AD). Accordingly it is preferred that the polypropylene composition (PC) has a melt flow rate $MFR_2$ (230 °C) measured according to ISO 1133 of at least 750 g/10min, more preferably in the range of 850 to 3000 g/10min, still more preferably in the range of 950 to 2500 g/10min, like in the range of 970 to 2000 g/10min and/or a weight average molecular weight Mw in the range of 50 to 110 kg/mol, more preferably in the range of 55 to 100 kg/mol, like in the range of 60 to 95 kg/mol, and/or a molecular weight distribution (Mw/Mn) in the range of 2.0 to 10.0, more preferably in the range of 2.5 to 9.0, like in the range of 2.9 to 8.5.

It is especially preferred that the ratio of the weight average molecular weight Mw of the mixture (M) to the weight average molecular weight Mw of the first polypropylene (PP1) [Mw(M)/Mw(PP1)] is in the range of 0.7 to 3.1, more preferably in the range 0.9 to 2.5, yet more preferably in the range of 1.0 to 2.2.

Additionally or alternatively to the previous paragraph it is preferred that the weight average molecular weight Mw of the polypropylene composition (PC) to the weight average molecular weight Mw of the first polypropylene (PP1) [Mw(PC)/Mw(PP1)] is in the range of 0.7 to 3.1, more preferably in the range 0.9 to 2.5, yet more preferably in the range of 1.0 to 2.2.

Additionally it is preferred that the ratio of the weight average molecular weight Mw of the second polypropylene (PP2) to the weight average molecular weight Mw of the mixture (M) [Mw(PP2)/Mw(M)] is in the range of 1.2 to 3.2, more preferably in the range of 1.5 to 2.7, yet more preferably in the range of 1.7 to 2.5.

Additionally or alternatively to the previous paragraph it is preferred that the ratio of the weight average molecular

weight Mw of the second polypropylene (PP2) to the weight average molecular weight Mw of the polypropylene composition (PC) [Mw(PP2)/Mw(PC)] is in the range of more than 1.2 to 3.2, more preferably in the range 1.5 to 2.7, yet more preferably in the range of 1.7 to 2.5.

Preferably the ratio of the melt flow rate $MFR_2$ measured according to ISO 1133 of the mixture (M) to the melt flow rate $MFR_2$ (230 °C) measured according to ISO 1133 of the first polypropylene (PP1) [$MFR_2$(M)/$MFR_2$(PP1)] is in the range of 0.08 to 0.62, more preferably in the range of 0.10 to 0.50, yet more preferably in the range of 0.15 to 0.35.

Thus it is likewise preferred that the ratio of the melt flow rate $MFR_2$ of the polypropylene composition (PC) to the melt flow rate $MFR_2$ of the first polypropylene (PP1) [$MFR_2$(PC)/$MFR_2$(PP1)] is in the range of 0.08 to 0.62, more preferably in the range of 0.10 to 0.50, yet more preferably in the range of 0.15 to 0.35.

As explained in detail below the first polypropylene (PP1) and/or the second polypropylene (PP2) comprise(s) apart from propylene also comonomers. Accordingly, the mixture (M) and/or the polypropylene composition (PC) comprise(s) apart from propylene ethylene and/or $C_4$ to $C_{12}$ $\alpha$-olefins.

Thus the mixture (M) and/or the polypropylene composition (PC) may comprise in addition to propylene monomers such as ethylene and/or $C_4$ to $C_{12}$ $\alpha$-olefins, in particular ethylene and/or $C_4$ to $C_8$ $\alpha$-olefins, e.g. ethylene, 1-butene and/or 1-hexene.

Preferably the mixture (M) and/or the polypropylene composition (PC) has/have a comonomer content, like an ethylene content, in the range of 0.1 to 6.0 wt.-%, more preferably in the range of 0.5 to 5.0 wt.-%, yet more preferably in the range of 1.0 to 4.5 wt.-%.

The mixture (M) and/or the polypropylene composition (PC) has/have preferably a rather high melting temperature Tm. Accordingly, it is preferred that the mixture (M) and/or the polypropylene composition (PC) has/have a melting temperature Tm of at least 120 °C, more preferably in the range of 120 to 155 °C, yet more in the range of 125 to 150 °C, still yet more preferably in the range of 130 to 147 °C.

Additionally, it is preferred that the mixture (M) and/or the polypropylene composition (PC) has/have a xylene cold soluble (XCS) content in the range of 1.0 to 10.0 wt.-%, more preferably in the range 1.5 to 9.0 wt.-%, yet more preferably in the range of 2.0 to 8.0 wt.-%, like in the range of 2.3 to 7.0 wt.-%.

The polypropylene composition (PC) (and thus also the mixture (M)) can be produced in a sequential polymerization process wherein in a first step the first polypropylene (PP1) and in a second step the second polypropylene (PP2) is produced. Alternatively, in the first step the second polypropylene (PP2) may be produced and subsequently in a second step the first polypropylene (PP1). Optionally, additives can be introduced by means of melt blending.

The first polypropylene (PP1) and the second polypropylene (PP2) will be now defined in more detail.

**The first polypropylene (PP1)**

As mentioned above the mixture (M) comprises, preferably consists of, the first polypropylene (PP1) and the second polypropylene (PP2). In the following both polymers are described in more detail.

The first polypropylene (PP1) preferably has a comonomer content, like ethylene content, of at most 3.0 wt.-%, more preferably of in the range of 0.3 to 2.5 wt.-%, yet more preferably in the range of 0.5 to 2.2 wt.-%. Accordingly, the first polypropylene (PP1) can be a first propylene homopolymer (H-PP1) or a first random propylene copolymer (R-PP1), the latter being preferred.

The expression "propylene homopolymer" used in the instant invention relates to a polypropylene that consists substantially, i.e. of more than 99.50 wt.-%, still more preferably of at least 99.70 wt.-%, of propylene units. In a preferred embodiment only propylene units in the propylene homopolymer are detectable.

In case the first polypropylene (PP1) is a first random propylene copolymer (R-PP1) it is appreciated that the first random propylene copolymer (R-PP1) comprises monomers co-polymerizable with propylene, for example comonomers such as ethylene and/or $C_4$ to $C_{12}$ $\alpha$-olefins, in particular ethylene and/or $C_4$ to $C_8$ $\alpha$-olefins, e.g. 1-butene and/or 1-hexene. Preferably the first random propylene copolymer (R-PP1) according to this invention comprises, especially consists of, monomers co-polymerizable with propylene from the group consisting of ethylene, 1-butene and 1-hexene. More specifically the first random propylene copolymer (R-PP1) of this invention comprises - apart from propylene - units derivable from ethylene and/or 1-butene. In a preferred embodiment the first random propylene copolymer (R-PP1) comprises units derivable from ethylene and propylene only, i.e. is a first propylene ethylene copolymer (PEC1).

Additionally, it is appreciated that the first random propylene copolymer (R-PP1), preferably the first propylene ethylene copolymer (PEC1), has preferably a co-monomer content, like an ethylene content, in the range of at most 3.0 wt.-%, more preferably of in the range of 0.3 to 2.5 wt.-%, yet more preferably in the range of 0.5 to 2.2 wt.-%.

The term "random" indicates in the present invention that the co-monomers of the random propylene copolymers are randomly distributed within the propylene copolymer. The term random is understood according to IUPAC (Glossary of basic terms in polymer science; IUPAC recommendations 1996).

It is especially preferred that the first polypropylene (PP1), more preferably the first random propylene copolymer (R-PP1), like the first propylene ethylene copolymer (PEC1), has a weight average molecular weight Mw in the range

of 35 to 75 kg/mol, preferably in the range of 38 to 70 kg/mol, still more preferably in the range of 40 to 65 kg/mol, like in the range of 43 to 60 kg/mol.

Additionally, it is preferred that the first polypropylene (PP1), more preferably the first random propylene copolymer (R-PP1), like the first propylene ethylene copolymer (PEC1), has a very high melt flow rate. Accordingly, the melt flow rate (230 °C) measured according to ISO 1133 of the first polypropylene (PP1), more preferably of the first random propylene copolymer (R-PP1), like of the first propylene ethylene copolymer (PEC1), is in the range of 1,500 to 10,000 g/10min, more preferably in the range of 2000 to 8,000 g/10 min.

Further it is preferred that the first polypropylene (PP1), more preferably the first random propylene copolymer (R-PP1), like the first propylene ethylene copolymer (PEC1), has a molecular weight distribution (Mw/Mn) in the range of 2.0 to 8.0, more preferably in the range of 2.5 to 7.5, like in the range of 3.0 to 7.0.

Further it is preferred that the first polypropylene (PP1), more preferably the first random propylene copolymer (R-PP1), like the first propylene ethylene copolymer (PEC1), has a xylene cold soluble (XCS) fraction in the range of 1.0 to 5.0 wt.-%, more preferably in the range of 1.3 to 4.5 wt.-%, like in the range of 1.5 to 4.0 wt.-%.

**The second polypropylene (PP2)**

The second polypropylene (PP2) preferably has a comonomer content, like ethylene content, in the range of 0.5 to 8.0 wt.-%, more preferably in the range of 1.0 to 7.0 wt.-%, yet more preferably in the range of 1.5 to 6.5 wt.-%. Accordingly, the second polypropylene (PP2) is a second random propylene copolymer (R-PP2).

It is appreciated that the second polypropylene (PP2) being a second random propylene copolymer (R-PP2) comprises monomers co-polymerizable with propylene, for example co-monomers such as ethylene and/or $C_4$ to $C_{12}$ $\alpha$-olefins, in particular ethylene and/or $C_4$ to $C_8$ $\alpha$-olefins, e.g. 1-butene and/or 1-hexene. Preferably the second random propylene copolymer (R-PP2) according to this invention comprises, especially consists of, monomers co-polymerizable with propylene from the group consisting of ethylene, 1-butene and 1-hexene. More specifically the second random propylene copolymer (R-PP2) of this invention comprises - apart from propylene - units derivable from ethylene and/or 1-butene. In a preferred embodiment the second random propylene copolymer (R-PP2) comprises units derivable from ethylene and propylene only, i.e. is a second propylene ethylene copolymer (PEC2).

Additionally, it is appreciated that the second random propylene copolymer (R-PP2), like the second propylene ethylene copolymer (PEC2), has preferably a co-monomer content, like an ethylene content, in the range of 0.5 to 8.0 wt.-%, more preferably in the range of 1.0 to 7.0 wt.-%, yet more preferably in the range of 1.5 to 6.5 wt.-%.

It is especially preferred that the weight average molecular weight Mw of second polypropylene (PP2) being a second random propylene copolymer (R-PP2) is higher than the weight average molecular weight Mw of the first polypropylene (PP1), like the first random propylene copolymer (R-PP1), e.g. the first propylene ethylene copolymer (PEC1). Accordingly, it is preferred that the weight average molecular weight Mw of the second polypropylene (PP2) being a second random propylene copolymer (R-PP2) is in the range of more than 90 to 250 kg/mol, more preferably in the range of 95 to 200 kg/mol, like in the range of 100 to 180 kg/mol.

Additionally or alternatively to the previous paragraph it is preferred that the second polypropylene (PP2) being a second random propylene copolymer (R-PP2) has a melt flow rate $MFR_2$ (230 °C) measured according to ISO 1133 in the range of more than 50 to 650 g/10min, more preferably in the range of 80 to 600 g/10min, more preferably in the range of 100 to 550 g/10min, like in the range of 110 to 500 g/10min.

Further it is preferred that the second polypropylene (PP2) being a second random propylene copolymer (R-PP2) has a molecular weight distribution (Mw/Mn) in the range of 2.0 to 8.0, more preferably in the range of 2.3 to 7.5, like in the range of 2.5 to 7.0.

Further it is preferred that the second polypropylene (PP2) being a second random propylene copolymer (R-PP2) has a xylene cold soluble (XCS) fraction in the range of 1.5 to 12.0 wt.-%, more preferably in the range of 1.8 to 10.0 wt.-%, like in the range of 2.0 to 9.0 wt.-%.

The polypropylene composition (PC) and/or the mixture (M) is preferably produced in a multistage process comprising at least two reactors connected in series.

Preferably the polypropylene composition (PC) and/or the mixture (M) is obtained by a sequential polymerization process comprising the steps of

(a) polymerizing in a first reactor propylene and ethylene and/or $C_4$ to $C_8$ $\alpha$-olefin obtaining thereby the first polypropylene (PP1),
(b) transferring said first polypropylene (PP1) in a second reactor,
(c) polymerizing in said second reactor in the presence of the first polypropylene (PP1) propylene and ethylene and/or $C_4$ to $C_8$ $\alpha$-olefin obtaining the second polypropylene (PP2).

The term "sequential polymerization process" indicates that the polypropylene composition (PC) and/or the

mixture (M) is produced in at least two, like three, reactors connected in series. Accordingly, the present process comprises at least a first reactor, a second reactor, and optionally a third reactor. The term "polymerization process" shall indicate that the main polymerization takes place. Thus in case the process consists of three polymerization reactors, this definition does not exclude the option that the overall process comprises for instance a pre-polymerization step in a pre-polymerization reactor. The term "consist of" is only a closing formulation in view of the main polymerization process.

The first reactor is preferably a slurry reactor and can be any continuous or simple stirred batch tank reactor or loop reactor operating in bulk or slurry. Bulk means a polymerization in a reaction medium that comprises of at least 60 % (w/w) monomer. According to the present invention the slurry reactor is preferably a (bulk) loop reactor.

The second reactor is preferably a gas phase reactor. Such gas phase reactors can be any mechanically mixed or fluid bed reactors. Preferably the gas phase reactors comprise a mechanically agitated fluid bed reactor with gas velocities of at least 0.2 m/sec. Thus it is appreciated that the gas phase reactor is a fluidized bed type reactor preferably with a mechanical stirrer.

Thus in a preferred embodiment the first reactor is a slurry reactor, like loop reactor, whereas the second reactor is a gas phase reactor (GPR). Accordingly, for the instant process at least two, preferably two polymerization reactors, namely a slurry reactor, like loop reactor, and a gas phase reactor connected in series are used. If needed prior to the slurry reactor a pre-polymerization reactor is placed.

A preferred multistage process is a "loop-gas phase"-process, such as developed by Borealis A/S, Denmark (known as BORSTAR® technology) described e.g. in patent literature, such as in EP 0 887 379, WO 92/12182 WO 2004/000899, WO 2004/111095, WO 99/24478, WO 99/24479 or in WO 00/68315.

A further suitable slurry-gas phase process is the Spheripol® process of Basell.

Preferably, in the instant process for producing polypropylene composition (PC) and/or the mixture (M) as defined above the conditions for the first reactor, i.e. the slurry reactor, like a loop reactor, may be as follows:

- the temperature is within the range of 50 °C to 110 °C, preferably between 60 °C and 100 °C, more preferably between 68 °C and 95 °C,
- the pressure is within the range of 20 bar to 80 bar, preferably between 40 bar to 70 bar,
- hydrogen can be added for controlling the molar mass in a manner known per se.

Subsequently, the reaction mixture of the first reactor is transferred to the second reactor, i.e. gas phase reactor, where the conditions are preferably as follows:

- the temperature is within the range of 50 °C to 130 °C, preferably between 60 °C and 100 °C,
- the pressure is within the range of 5 bar to 50 bar, preferably between 15 bar to 35 bar,
- hydrogen can be added for controlling the molar mass in a manner known per se.

The residence time can vary in the three reactor zones.

In one embodiment of the process for producing the polypropylene composition (PC) and/or the mixture (M) the residence time in bulk reactor, e.g. loop is in the range 0.1 to 2.5 hours, e.g. 0.15 to 1.5 hours and the residence time in gas phase reactor will generally be 0.2 to 6.0 hours, like 0.5 to 4.0 hours.

If desired, the polymerization may be effected in a known manner under supercritical conditions in the first reactor, i.e. in the slurry reactor, like in the loop reactor, and/or as a condensed mode in the gas phase reactors.

As mentioned above the propylene copolymer (PP) of the instant invention is preferably produced in the presence of a single-site catalyst, in particular in the presence of a metallocene catalyst, said metallocene catalyst system comprises

(i) a transition metal compound of formula (I)

$$R_n(Cp')_2MX_2 \qquad (I)$$

wherein

"M" is zirconium (Zr) or hafnium (Hf),
each "X" is independently a monovalent anionic σ-ligand,
each "Cp' " is a cyclopentadienyl-type organic ligand independently selected from the group consisting of substituted cyclopentadienyl, substituted indenyl, substituted tetrahydroindenyl, and substituted or unsubstituted fluorenyl, said organic ligands coordinate to the transition metal (M),
"R" is a bivalent bridging group linking said organic ligands (Cp'),
"n" is 1 or 2, preferably 1, and

(ii) optionally a cocatalyst (Co) comprising an element (E) of group 13 of the periodic table (IUPAC), preferably a cocatalyst (Co) comprising a compound of Al.

In one specific embodiment the solid single site catalyst system has a porosity measured according ASTM 4641 of less than 1.40 ml/g and/or a surface area measured according to ASTM D 3663 of lower than 25 $m^2/g$. Preferably the solid catalyst system (SCS) has a surface area of lower than 15 $m^2/g$, yet still lower than 10 $m^2/g$ and most preferred lower than 5 $m^2/g$, which is the lowest measurement limit. The surface area according to this invention is measured according to ASTM D 3663 ($N_2$). Alternatively or additionally it is appreciated that the solid single site catalyst system has a porosity of less than 1.30 ml/g and more preferably less than 1.00 ml/g. The porosity has been measured according to ASTM 4641 ($N_2$). In another preferred embodiment the porosity is not detectable when determined with the method applied according to ASTM 4641 (N2).

Furthermore the solid single site catalyst system typically has a mean particle size of not more than 500 $\mu$m, i.e. preferably in the range of 2 to 500 $\mu$m, more preferably 5 to 200 $\mu$m. It is in particular preferred that the mean particle size is below 80 $\mu$m, still more preferably below 70 $\mu$m. A preferred range for the mean particle size is 5 to 70 $\mu$m, or even 10 to 60 $\mu$m.

As stated above the transition metal (M) is zirconium (Zr) or hafnium (Hf), preferably zirconium (Zr).

The term "$\sigma$-ligand" is understood in the whole description in a known manner, i.e. a group bound to the metal via a sigma bond. Thus the anionic ligands "X" can independently be halogen or be selected from the group consisting of R', OR', $SiR'_3$, $OSiR'_3$, $OSO_2CF_3$, OCOR', SR', $NR'_2$ or $PR'_2$ group wherein R' is independently hydrogen, a linear or branched, cyclic or acyclic, $C_1$-$C_{20}$-alkyl, $C_2$-$C_{20}$-alkenyl, $C_2$-$C_{20}$-alkynyl, $C_3$-$C_{12}$-cycloalkyl, $C_6$-$C_{20}$-aryl, $C_7$-$C_{20}$-arylalkyl, $C_7$-$C_{20}$-alkylaryl, $C_8$-$C_{20}$-arylalkenyl, in which the R' group can optionally contain one or more heteroatoms belonging to groups 14 to 16. In a preferred embodiments the anionic ligands "X" are identical and either halogen, like Cl, or methyl or benzyl.

A preferred monovalent anionic ligand is halogen, in particular chlorine (Cl).
The substituted cyclopentadienyl-type ligand(s) may have one or more substituent(s) being selected from the group consisting of halogen, hydrocarbyl (e.g. $C_1$-$C_{20}$-alkyl, $C_2$-$C_{20}$-alkenyl, $C_2$-$C_{20}$-alkynyl, , $C_3$-$C_{20}$-cycloalkyl, like $C_1$-$C_{20}$-alkyl substituted $C_5$-$C_{20}$-cycloalkyl, $C_6$-$C_{20}$-aryl, $C_5$-$C_{20}$-cycloalkyl substituted $C_1$-$C_{20}$-alkyl wherein the cycloalkyl residue is substituted by $C_1$-$C_{20}$-alkyl, $C_7$-$C_{20}$-arylalkyl, $C_3$-$C_{12}$-cycloalkyl which contains 1, 2, 3 or 4 heteroatom(s) in the ring moiety, $C_6$-$C_{20}$-heteroaryl, $C_1$-$C_{20}$-haloalkyl, $-SiR''_3$ , -SR", $-PR''_2$ or $-NR''_2$, each R" is independently a hydrogen or hydrocarbyl (e. g. $C_1$-$C_{20}$-alkyl, $C_1$-$C_{20}$-alkenyl, $C_2$-$C_{20}$-alkynyl, $C_3$-$C_{12}$-cycloalkyl, or $C_6$-$C_{20}$-aryl) or e.g. in case of $-NR''_2$, the two substituents R" can form a ring, e.g. five-or six-membered ring, together with the nitrogen atom where they are attached to.

Further "R" of formula (I) is preferably a bridge of 1 to 4 atoms, such atoms being independently carbon (C), silicon (Si), germanium (Ge) or oxygen (O) atom(s), whereby each of the bridge atoms may bear independently substituents, such as $C_1$-$C_{20}$-hydrocarbyl, tri($C_1$-$C_{20}$-alkyl)silyl, tri($C_1$-$C_{20}$-alkyl)siloxy and more preferably "R" is a one atom bridge like e.g. $-SiR'''_2-$, wherein each R'" is independently $C_1$-$C_{20}$-alkyl, $C_2$-$C_{20}$-alkenyl, $C_2$-$C_{20}$-alkynyl, $C_3$-$C_{12}$-cycloalkyl, $C_6$-$C_{20}$-aryl, alkylaryl or arylalkyl, or tri($C_1$-$C_{20}$-alkyl)silyl-residue, such as trimethylsilyl-, or the two R'" can be part of a ring system including the Si bridging atom.

In a preferred embodiment the transition metal compound has the formula (II)

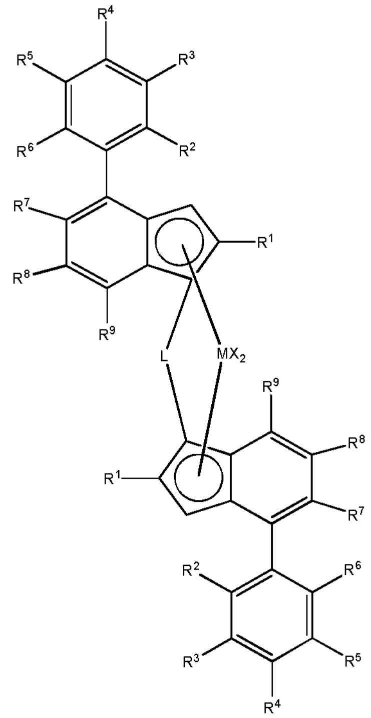

wherein

M is zirconium (Zr) or hafnium (Hf), preferably zirconium (Zr),

X are ligands with a σ-bond to the metal "M", preferably those as defined above for formula (I), preferably chlorine (Cl) or methyl ($CH_3$), the former especially preferred,

$R^1$ are equal to or different from each other, and are selected from the group consisting of linear saturated $C_1$-$C_{20}$-alkyl, linear unsaturated $C_1$-$C_{20}$-alkyl, branched saturated $C_1$-$C_{20}$-alkyl, branched unsaturated $C_1$-$C_{20}$-alkyl, $C_3$-$C_{20}$ cycloalkyl, $C_6$-$C_{20}$ aryl, $C_7$-$C_{20}$ alkylaryl, and $C_7$-$C_{20}$ arylalkyl, optionally containing one or more heteroatoms of groups 14 to 16 of the Periodic Table (IUPAC), preferably they are equal to each other, and are $C_1$-$C_{10}$ linear or branched hydrocarbyl, more preferably are equal to each other, and are $C_1$-$C_6$ linear or branched alkyl,

$R^2$ to $R^6$ are equal to or different from each other and are selected from the group consisting of hydrogen, linear saturated $C_1$-$C_{20}$-alkyl, linear unsaturated $C_1$-$C_{20}$-alkyl, branched saturated $C_1$-$C_{20}$-alkyl, branched unsaturated $C_1$-$C_{20}$-alkyl, $C_3$-$C_{20}$-cycloalkyl, $C_6$-$C_{20}$-aryl, $C_7$-$C_{20}$-alkylaryl, and $C_7$-$C_{20}$-arylalkyl, optionally containing one or more heteroatoms of groups 14 to 16 of the Periodic Table (IUPAC), preferably are equal to each other and are $C_1$-$C_{10}$ linear or branched hydrocarbyl, more preferably are $C_1$-$C_6$ linear or branched alkyl,

$R^7$ and $R^8$ are equal to or different from each other and selected from the group consisting of hydrogen, linear saturated $C_1$-$C_{20}$-alkyl, linear unsaturated $C_1$-$C_{20}$-alkyl, branched saturated $C_1$-$C_{20}$-alkyl, branched unsaturated $C_1$-$C_{20}$ alkyl, $C_3$-$C_{20}$-cycloalkyl, $C_6$-$C_{20}$ aryl, $C_7$-$C_{20}$ alkylaryl, $C_7$-$C_{20}$ arylalkyl, optionally containing one or more heteroatoms of groups 14 to 16 of the Periodic Table (IUPAC), $SiR^{10}_3$, $GeR^{10}_3$, $OR^{10}$, $SR^{10}$ and $NR^{10}_2$, wherein

$R^{10}$ is selected from the group consisting of linear saturated $C_1$-$C_{20}$-alkyl, linear unsaturated $C_1$-$C_{20}$-alkyl, branched saturated $C_1$-$C_{20}$-alkyl, branched unsaturated $C_1$-$C_{20}$-alkyl, $C_3$-$C_{20}$-cycloalkyl, $C_6$-$C_{20}$-aryl, $C_7$-$C_{20}$-alkylaryl, and $C_7$-$C_{20}$-arylalkyl, optionally containing one or more heteroatoms of groups 14 to 16 of the Periodic Table (IUPAC), and/or

$R^7$ and $R^8$ being optionally part of a $C_4$-$C_{20}$-carbon ring system together with the indenyl carbons to which they are attached, preferably a $C_5$ ring, optionally one carbon atom can be substituted by a nitrogen, sulfur or oxygen atom,

$R^9$ are equal to or different from each other and are selected from the group consisting of hydrogen, linear saturated

$C_1$-$C_{20}$-alkyl, linear unsaturated $C_1$-$C_{20}$-alkyl, branched saturated $C_1$-$C_{20}$-alkyl, branched unsaturated $C_1$-$C_{20}$-alkyl, $C_3$-$C_{20}$ cycloalkyl, $C_6$-$C_{20}$-aryl, $C_7$-$C_{20}$-alkylaryl, $C_7$-$C_{20}$-arylalkyl, $OR^{10}$, and $SR^{10}$, wherein

$R^{10}$ is defined as before,

preferably $R^9$ are equal to or different from each other and are H or $CH_3$, most preferably $R^9$ are both H.

L is a bivalent group bridging the two indenyl ligands, preferably being a $C_2R^{11}_4$ unit or a $SiR^{11}_2$ or $GeR^{11}_2$, wherein,

$R^{11}$ is selected from the group consisting of H, linear saturated $C_1$-$C_{20}$-alkyl, linear unsaturated $C_1$-$C_{20}$-alkyl, branched saturated $C_1$-$C_{20}$-alkyl, branched unsaturated $C_1$-$C_{20}$-alkyl, $C_3$-$C_{20}$-cycloalkyl, $C_6$-$C_{20}$-aryl, $C_7$-$C_{20}$-alkylaryl or $C_7$-$C_{20}$-arylalkyl, optionally containing one or more heteroatoms of groups 14 to 16 of the Periodic Table (IUPAC), preferably $Si(CH_3)_2$, $SiCH_3C_6H_{11}$, or $SiPh_2$, wherein $C_6H_{11}$ is cyclohexyl.

Preferably the transition metal compound of formula (II) is $C_2$-symmetric or pseudo-$C_2$-symmetric. Concerning the definition of symmetry it is referred to Resconi et al. Chemical Reviews, 2000, Vol. 100, No. 4 1263 and references cited therein.

Preferably the residues $R^1$ are equal to or different from each other, more preferably equal, and are selected from the group consisting of linear saturated $C_1$-$C_{10}$-alkyl, linear unsaturated $C_1$-$C_{10}$-alkyl, branched saturated $C_1$-$C_{10}$-alkyl, branched unsaturated $C_1$-$C_{10}$-alkyl and $C_7$-$C_{12}$-arylalkyl. Even more preferably the residues $R^1$ are equal to or different from each other, more preferably equal, and are selected from the group consisting of linear saturated $C_1$-$C_6$-alkyl, linear unsaturated $C_1$-$C_6$-alkyl, branched saturated $C_1$-$C_6$-alkyl, branched unsaturated $C_1$-$C_6$-alkyl and $C_7$-$C_{10}$-arylalkyl. Yet more preferably the residues $R^1$ are equal to or different from each other, more preferably equal, and are selected from the group consisting of linear or branched $C_1$-$C_4$-hydrocarbyl, such as for example methyl or ethyl.

Preferably the residues $R^2$ to $R^6$ are equal to or different from each other and linear saturated $C_1$-$C_4$-alkyl or branched saturated $C_1$-$C_4$-alkyl. Even more preferably the residues $R^2$ to $R^6$ are equal to or different from each other, more preferably equal, and are selected from the group consisting of methyl, ethyl, iso-propyl and tert-butyl.

Preferably $R^7$ and $R^8$ are equal to or different from each other and are selected from hydrogen and methyl, or they are part of a 5-carbon ring including the two indenyl ring carbons to which they are attached. In another preferred embodiment, $R^7$ is selected from $OCH_3$ and $OC_2H_5$, and $R^8$ is tert-butyl.

In a preferred embodiment the transition metal compound is rac-methyl(cyclohexyl)silanediyl bis(2-methyl-4-(4-tert-butylphenyl)indenyl)zirconium dichloride.

In a second preferred embodiment, the transition metal compound is rac-dimethylsilanediyl bis(2-methyl-4-phenyl-1,5,6,7-tetrahydro-s-indacen-1-yl)zirconium dichloride.

In a third preferred embodiment, the transition metal compound is rac-dimethylsilanediyl bis(2-methyl-4-phenyl-5-methoxy-6-tert-butylindenyl)zirconium dichloride.

As a further requirement the solid single site catalyst system according to this invention may comprise a cocatalyst (Co) comprising an element (E) of group 13 of the periodic table (IUPAC), for instance the cocatalyst (Co) comprises a compound of Al. Examples of such cocatalyst (Co) are organo aluminium compounds, such as aluminoxane compounds.

Such compounds of Al, preferably aluminoxanes, can be used as the only compound in the cocatalyst (Co) or together with other cocatalyst compound(s). Thus besides or in addition to the compounds of Al, i.e. the aluminoxanes, other cation complex forming cocatalyst compounds, like boron compounds can be used. Said cocatalysts are commercially available or can be prepared according to the prior art literature. Preferably however in the manufacture of the solid catalyst system only compounds of Al as cocatalyst (Co) are employed.

In particular preferred cocatalysts (Co) are the aluminoxanes, in particular the $C_1$ to $C_{10}$-alkylaluminoxanes, most particularly methylaluminoxane (MAO).

Preferably, the organo-zirconium compound of formula (I) and the cocatalyst (Co) of the solid single site catalyst system represent at least 70 wt%, more preferably at least 80 wt%, even more preferably at least 90 wt%, even further preferably at least 95 wt% of the solid catalyst system.

Thus it is appreciated that the solid single site catalyst system is featured by the fact that it is self-supported, i.e. it does not comprise any catalytically inert support material, like for instance silica, alumina or $MgCl_2$, which is otherwise commonly used in heterogeneous catalyst systems, i.e. the catalyst is not supported on external support or carrier material. As a consequence of that the solid single site catalyst system is self-supported and it has a rather low surface area.

In one embodiment the solid single site catalyst system is obtained by the emulsion/solidification technology, the basic principles of which are described in WO 03/051934. This document is herewith included in its entirety by reference.

Hence the solid single site catalyst system is preferably in the form of solid catalyst particles, obtainable by a process comprising the steps of

a) preparing a solution of one or more catalyst components;
b) dispersing said solution in a second solvent to form an emulsion in which said one or more catalyst components are present in the droplets of the dispersed phase,
c) solidifying said dispersed phase to convert said droplets to solid particles and optionally recovering said particles to obtain said catalyst.

Preferably a first solvent, more preferably a first organic solvent, is used to form said solution. Still more preferably the organic solvent is selected from the group consisting of a linear alkane, cyclic alkane, aromatic hydrocarbon and halogen-containing hydrocarbon.

Moreover the second solvent forming the continuous phase is an inert solvent towards to catalyst components. The second solvent might be immiscible towards the solution of the catalyst components at least under the conditions (like temperature) during the dispersing step. The term "immiscible with the catalyst solution" means that the second solvent (continuous phase) is fully immiscible or partly immiscible i.e. not fully miscible with the dispersed phase solution.

Preferably the immiscible solvent comprises a fluorinated organic solvent and/or a functionalized derivative thereof, still more preferably the immiscible solvent comprises a semi-, highly- or perfluorinated hydrocarbon and/or a functionalized derivative thereof. It is in particular preferred, that said immiscible solvent comprises a perfluorohydrocarbon or a functionalized derivative thereof, preferably $C_3$-$C_{30}$-perfluoroalkanes, -alkenes or - cycloalkanes, more preferred $C_4$-$C_{10}$-perfluoro-alkanes, -alkenes or -cycloalkanes, particularly preferred perfluorohexane, perfluoroheptane, perfluorooctane or perfluoro (methylcyclohexane) or perfluoro (1,3-dimethylcyclohexane) or a mixture thereof. Furthermore it is preferred that the emulsion comprising said continuous phase and said dispersed phase is a bi-or multiphasic system as known in the art. An emulsifier may be used for forming and stabilising the emulsion. After the formation of the emulsion system, said catalyst is formed in situ from catalyst components in said solution.

In principle, the emulsifying agent may be any suitable agent which contributes to the formation and/or stabilization of the emulsion and which does not have any adverse effect on the catalytic activity of the catalyst. The emulsifying agent may e.g. be a surfactant based on hydrocarbons optionally interrupted with (a) heteroatom(s), preferably halogenated hydrocarbons optionally having a functional group, preferably semi-, highly- or perfluorinated hydrocarbons as known in the art. Alternatively, the emulsifying agent may be prepared during the emulsion preparation, e.g. by reacting a surfactant precursor with a compound of the catalyst solution. Said surfactant precursor may be a halogenated hydrocarbon with at least one functional group, e.g. a highly fluorinated $C_1$-$C_n$ (suitably $C_4$-$C_{30}$ or $C_5$-$C_{15}$) alcohol (e.g. highly fluorinated heptanol, octanol or nonanol), oxide (e.g. propenoxide) or acrylate ester which reacts e.g. with a cocatalyst component, such as aluminoxane to form the "actual" surfactant.

In principle any solidification method can be used for forming the solid particles from the dispersed droplets. According to one preferable embodiment the solidification is effected by a temperature change treatment. Hence the emulsion subjected to gradual temperature change of up to 10°C/min, preferably 0.5 to 6°C/min and more preferably 1 to 5°C/min. Even more preferred the emulsion is subjected to a temperature change of more than 40°C, preferably more than 50°C within less than 10 seconds, preferably less than 6 seconds.

For further details, embodiments and examples of the continuous and dispersed phase system, emulsion formation method, emulsifying agent and solidification methods reference is made e.g. to the above cited international patent application WO 03/051934.

All or part of the preparation steps can be done in a continuous manner. Reference is made to WO 2006/069733 describing principles of such a continuous or semi-continuous preparation methods of the solid catalyst types, prepared via emulsion/solidification method.

The above described catalyst components are prepared according to the methods described in WO 01/48034.

**Additives (AD)**

In addition to the mixture (M) the polypropylene composition (PC) may include additives (AD). Typical additives are nucleating agents acid scavengers, antioxidants, colorants, light stabilisers, plasticizers, slip agents, anti-scratch agents, dispersing agents, processing aids, lubricants, pigments, and the like.

Such additives are commercially available and for example described in "Plastic Additives Handbook", 6th edition 2009 of Hans Zweifel (pages 1141 to 1190).

Furthermore, the term "additives (AD)" according to the present invention also includes carrier materials, in particular polymeric carrier materials (PCM).

*The Polymeric Carrier Material (PCM)*

Preferably the polypropylene composition (PC) of the invention does not comprise (a) further polymer (s) different to the mixture (M), i.e. different to the first polypropylene (PP1) and the second polypropylene (PP2), in an amount exceeding 10 wt.-%, preferably in an amount exceeding 5 wt.-%, more preferably in an amount exceeding 3 wt.-%, based on the weight of the polypropylene composition (PC). If an additional polymer is present, such a polymer is typically a polymeric carrier material (PCM) for additives (AD). Any carrier material for additives (AD) is not calculated to the amount of polymeric compounds as indicated in the present invention, but to the amount of the respective additive.

The polymeric carrier material (PCM) is a carrier polymer for the other additives (AD) to ensure a uniform distribution in the composition of the invention. The polymeric carrier material (PCM) is not limited to a particular polymer. The polymeric carrier material (PCM) may be ethylene homopolymer, ethylene copolymer obtained from ethylene and $\alpha$-olefin comonomer such as $C_3$ to $C_8$ $\alpha$-olefin comonomer, propylene homopolymer and/or propylene copolymer obtained from propylene and $\alpha$-olefin comonomer such as ethylene and/or $C_4$ to $C_8$ $\alpha$-olefin comonomer.

**The melt blown web (MBW)**

The present invention is not only directed to the melt blown fibers (MBFs) as such but also to articles, like webs, made thereof.

In particular the present invention is directed to a melt blown web (MBW) comprising melt blown fibers (MBFs) of the instant invention. More preferably the melt blown web (MBW) comprises, based on the total weight of the melt blown web (MBW), at least 80 wt.-%, more preferably at least 90 wt.-%, yet more preferably at least 95 wt.-%, like at least 99 wt.-%, of melt blown fibers (MBFs) as defined herein. In one specific embodiment the melt blown web (MBW) consists of the melt blown fibers (MBFs) as defined herein.

Further the present invention is directed to articles comprising the melt blown fibers (MBFs) and/or the melt-blown web (MBW) of the present invention, like filtration medium (filter), diaper, sanitary napkin, panty liner, incontinence product for adults, protective clothing, surgical drape, surgical gown, and surgical wear, comprising the melt-blown fibers (MBFs) and/or the melt-blown web (MBW), preferably in an amount of at least 80.0 wt.-% of, more preferably in an amount of at least 95.0 wt.-%, based on the total weight of the article. In one embodiment of the present invention, the article consists of the melt-blown fibers (MBFs) and/or the melt-blown web (MBW).

In one embodiment the invention is directed to articles selected from the group consisting of filtration medium (filter), diaper, sanitary napkin, panty liner, incontinence product for adults, protective clothing, surgical drape, surgical gown, and surgical wear, comprising a melt blown web (MBW) comprising, e.g. consisting of, the melt blown fibers (MBFs) of the present invention and a spunbonded fabric known in the art.

The weight per unit area of the melt-blown web (MBW) depends very much on the end use, however it is preferred that the melt-blown web has a weight per unit area of at least 1 $g/m^2$, more preferably in the range from 1 to 250 $g/m^2$, still more preferably in the range from 3 to 220 $g/m^2$, yet more preferably in the range from 6 to 200 $g/m^2$, like in the range from 6 to 100 $g/m^2$. These values are especially applicable in case the melt-blown web (MBW) according to the instant invention is produced as a single layer web (e.g. for air filtration purposes).

In case the melt-blown web (MBW) according to the instant invention is produced as one part of a multi-layer construction like an SMS-web comprising, preferably consisting of, a spunbonded web layer, a melt-blown web (MBW) layer and another spunbonded web layer (e.g. for hygienic application), the melt-blown web (MBW) has a weight per unit area of at least 1 $g/m^2$, more preferably in the range of 1 to 30 $g/m^2$, still more preferably in the range of 1.3 to 20 $g/m^2$. Alternatively, the multi-layer construction can also include a multiplicity of melt-blown web layers and spunbonded web layers, such as a SSMMS construction.

The instant polypropylene composition (PC) is preferably used in pellet or granule form for the preparation of the melt-blown fibers (MBFs) (and thus of the melt-blown web (MBW)).

In the process metering pumps are used to pump the molten t polypropylene composition (PC) to a distribution system having a series of die tips, the polypropylene composition (PC) being in the molten state at some processing temperature. The die tip is designed in such a way that the holes are in a straight line with high-velocity air impinging from each side. A typical die will have 0.3 to 0.5 mm diameter, preferably 0.4 mm diameter, holes spaced at 10 to 16 per cm (25 to 40 per inch). The impinging high-velocity hot air attenuates the filaments and forms the desired fibers. Immediately below or adjacent to the die, a large amount of ambient air is drawn into the hot air stream containing the fibers which cools the hot gas and solidifies the fibers onto a forming belt or other solid surface that is typically moving in such a manner as to create a continually renewed surface for the fibers to contact and form a web. The processing temperature is one factor in the final web properties. The "optimal" processing temperature is one at which ideal properties of the web are achieved such as low shot with good hand and high barrier properties, or good filtration properties.

The properties of the melt-blown fibers (MBFs) and/or the melt blown web (MBW) can be further improved in case the cooling of the fibers is not accomplished with ambient air but by water cooling.

In the following the present invention is further illustrated by means of examples.

## EXAMPLES

### 1. Definitions/Measuring Methods

The following definitions of terms and determination methods apply for the above general description of the invention as well as to the below examples unless otherwise defined. **Calculation** of comonomer content of the second polypropylene (PP2):

$$\frac{C(PP) - w(PP1)x\,C(PP1)}{w(PP2)} = C(PP2) \quad (I)$$

wherein

| | |
|---|---|
| w(PP1) | is the weight fraction [in wt.-%] of the first polypropylene (PP1), |
| w(PP2) | is the weight fraction [in wt.-%] of second polypropylene (PP2), |
| C(PP1) | is the comonomer content [in wt.-%] of the first polypropylene (PP1), |
| C(PP) | is the comonomer content [in wt.-%] of the polypropylene composition (PC)/the mixture (M), |
| C(PP2) | is the calculated comonomer content [in wt.-%] of the second polypropylene (PP2). |

**Calculation** of the xylene cold soluble (XCS) content of the second polypropylene (PP2):

$$\frac{XS(PP) - w(PP1)x\,XS(PP1)}{w(PP2)} = XS(PP2) \quad (II)$$

wherein

| | |
|---|---|
| w(PP1) | is the weight fraction [in wt.-%] of the first polypropylene (PP1), |
| w(PP2) | is the weight fraction [in wt.-%] of second polypropylene (PP2) |
| XS(PP1) | is the xylene cold soluble (XCS) content [in wt.-%] of the first polypropylene (PP1), |
| XS(PP) | is the xylene cold soluble (XCS) content [in wt.-%] of the polypropylene composition (PC)/the mixture (M), |
| XS(PP2) | is the calculated xylene cold soluble (XCS) content [in wt.-%] of the second polypropylene (PP2), respectively. |

**Calculation** of melt flow rate $MFR_2$ (230 °C / 2.16 kg) of the second propylene copolymer fraction (R-PP2):

$$MFR(PP2) = 10^{\left[\frac{\log(MFR(PP)) - w(PP1)\,x\,\log(MFR(PP1))}{w(PP2)}\right]} \quad (III)$$

wherein

| | |
|---|---|
| w(PP1) | is the weight fraction [in wt.-%] of the first polypropylene (PP1), |
| w(PP2) | is the weight fraction [in wt.-%] of second polypropylene (PP2), |
| MFR(PP1) | is the melt flow rate $MFR_2$ (230 °C / 2.16 kg) [in g/10min] of first polypropylene (PP1), |
| MFR(PP) | is the melt flow rate $MFR_2$ (230 °C / 2.16 kg) [in g/10min] of the polypropylene composition (PC)/the mixture (M), |
| MFR(PP2) | is the calculated melt flow rate $MFR_2$ (230 °C / 2.16 kg) [in g/10min] of the second polypropylene (PP2). |

### Quantification of microstructure by NMR spectroscopy

Quantitative nuclear-magnetic resonance (NMR) spectroscopy was used to quantify the comonomer content of the polymers. Quantitative $^{13}C\{^1H\}$ NMR spectra were recorded in the solution-state using a Bruker Advance III 400 NMR spectrometer operating at 400.15 and 100.62 MHz for $^1H$ and $^{13}C$ respectively. All spectra were recorded using a $^{13}C$ optimised 10 mm extended temperature probehead at 125°C using nitrogen gas for all pneumatics. Approximately 200 mg of material was dissolved in 3 ml of *1,2*-tetrachloroethane-$d_2$ (TCE-$d_2$) along with chromium-(III)-acetylacetonate

($Cr(acac)_3$) resulting in a 65 mM solution of relaxation agent in solvent (Singh, G., Kothari, A., Gupta, V., Polymer Testing 28 5 (2009), 475). To ensure a homogenous solution, after initial sample preparation in a heat block, the NMR tube was further heated in a rotatary oven for at least 1 hour. Upon insertion into the magnet the tube was spun at 10 Hz. This setup was chosen primarily for the high resolution and quantitatively needed for accurate ethylene content quantification. Standard single-pulse excitation was employed without NOE, using an optimised tip angle, 1 s recycle delay and a bi-level WALTZ 16 decoupling scheme (Zhou, Z., Kuemmerle, R., Qiu, X., Redwine, D., Cong, R., Taha, A., Baugh, D. Winniford, B., J. Mag. Reson. 187 (2007) 225; Busico, V., Carbonniere, P., Cipullo, R., Pellecchia, R., Severn, J., Talarico, G., Macromol. Rapid Commun. 2007, 28, 1128). A total of 6144 (6k) transients were acquired per spectra.

Quantitative $^{13}C\{^1H\}$ NMR spectra were processed, integrated and relevant quantitative properties determined from the integrals using proprietary computer programs. All chemical shifts were indirectly referenced to the central methylene group of the ethylene block (EEE) at 30.00 ppm using the chemical shift of the solvent. This approach allowed comparable referencing even when this structural unit was not present. Characteristic signals corresponding to the incorporation of ethylene were observed Cheng, H. N., Macromolecules 17 (1984), 1950).

With characteristic signals corresponding to 2,1 erythro regio defects observed (as described in L. Resconi, L. Cavallo, A. Fait, F. Piemontesi, Chem. Rev. 2000, 100 (4), 1253, in Cheng, H. N., Macromolecules 1984, 17, 1950, and in W-J. Wang and S. Zhu, Macromolecules 2000, 33 1157) the correction for the influence of the regio defects on determined properties was required. Characteristic signals corresponding to other types of regio defects were not observed.

The comonomer fraction was quantified using the method of Wang et. al. (Wang, W-J., Zhu, S., Macromolecules 33 (2000), 1157) through integration of multiple signals across the whole spectral region in the $^{13}C\{^1H\}$ spectra. This method was chosen for its robust nature and ability to account for the presence of regio-defects when needed. Integral regions were slightly adjusted to increase applicability across the whole range of encountered comonomer contents.

For systems where only isolated ethylene in PPEPP sequences was observed the method of Wang et. al. was modified to reduce the influence of non-zero integrals of sites that are known to not be present. This approach reduced the overestimation of ethylene content for such systems and was achieved by reduction of the number of sites used to determine the absolute ethylene content to:

$$E = 0.5(S\beta\beta + S\beta\gamma + S\beta\delta + 0.5(S\alpha\beta + S\alpha\gamma))$$

Through the use of this set of sites the corresponding integral equation becomes:

$$E = 0.5(I_H + I_G + 0.5(I_C + I_D))$$

using the same notation used in the article of Wang et. al. (Wang, W-J., Zhu, S., Macromolecules 33 (2000), 1157). Equations used for absolute propylene content were not modified.

The mole percent comonomer incorporation was calculated from the mole fraction:

$$E\ [mol\%] = 100 * fE$$

The weight percent comonomer incorporation was calculated from the mole fraction:

$$E\ [wt\%] = 100 * (fE * 28.06) / ((fE * 28.06) + ((1-fE) * 42.08))$$

The comonomer sequence distribution at the triad level was determined using the analysis method of Kakugo et al. (Kakugo, M., Naito, Y., Mizunuma, K., Miyatake, T. Macromolecules 15 (1982) 1150). This method was chosen for its robust nature and integration regions slightly adjusted to increase applicability to a wider range of comonomer contents.

**$MFR_2$ (230°C / 2.16 kg)** is measured according to ISO 1133 at 230°C and 2.16 kg load. **Zero shear viscosity ($\eta_0$)** Dynamic rheological measurements were carried out with Rheometrics RDA-II QC on compression molded samples under nitrogen atmosphere at 200°C using 25 mm -diameter plate and plate geometry. The oscillatory shear experiments were done within the linear viscoelastic range of strain at frequencies from 0.01 to 500 rad/s. (ISO6721-1)

The values of storage modulus (G'), loss modulus (G"), complex modulus (G*) and complex viscosity ($\eta$*) were obtained as a function of frequency ($\omega$).

The Zero shear viscosity ($\eta_0$) was calculated using complex fluidity defined as the reciprocal of complex viscosity. Its real and imaginary part are thus defined by

$$f'(\omega) = \eta'(\omega) / [\eta'(\omega)^2 + \eta''(\omega)^2]$$

and

$$f''(\omega) = \eta''(\omega) / [\eta'(\omega)^2 + \eta''(\omega)^2]$$

From the following equations

$$\eta' = G''/\omega \quad \text{and} \quad \eta'' = G'/\omega$$

$$f'(\omega) = G''(\omega) * \omega / [G'(\omega)^2 + G''(\omega)^2]$$

$$f''(\omega) = G'(\omega) * \omega / [G'(\omega)^2 + G''(\omega)^2]$$

**Number average molecular weight ($M_n$), weight average molecular weight ($M_w$) and molecular weight distribution (MWD)**

Molecular weight averages (Mw, Mn), and the molecular weight distribution (MWD), i.e. the Mw/Mn (wherein Mn is the number average molecular weight and Mw is the weight average molecular weight), were determined by Gel Permeation

Chromatography (GPC) according to ISO 16014-4:2003 and ASTM D 6474-99. A PolymerChar GPC instrument, equipped with infrared (IR) detector was used with 3 x Olexis and lx Olexis Guard columns from Polymer Laboratories and 1 ,2,4-trichlorobenzene (TCB, stabilized with 250 mg/L 2,6-Di tert butyl-4-methyl-phenol) as solvent at 160 °C and at a constant flow rate of 1 mL/min. 200 µï. of sample solution were injected per analysis. The column set was calibrated using universal calibration (according to ISO 16014-2:2003) with at least 15 narrow MWD polystyrene (PS) standards in the range of 0,5 kg/mol to 11 500 kg/mol. Mark Houwink constants for PS, PE and PP used are as described per ASTM D 6474-99. All samples were prepared by dissolving 5.0 - 9.0 mg of polymer in 8 mL (at 160 °C) of stabilized TCB (same as mobile phase) for 2.5 hours for PP or 3 hours for PE at max. 160°C under continuous gentle shaking in the autosampler of the GPC instrument.

**Xylene cold soluble fraction (XCS wt.-%):** Content of xylene cold solubles (XCS) is determined at 25 °C according ISO 16152; first edition; 2005-07-01.

**DSC analysis, melting temperature ($T_m$) and heat of fusion ($H_f$), crystallization temperature ($T_c$) and heat of crystallization ($H_c$):** measured with a TA Instrument Q200 differential scanning calorimetry (DSC) on 5 to 7 mg samples. DSC is run according to ISO 11357 / part 3 /method C2 in a heat / cool / heat cycle with a scan rate of 10 °C/min in the temperature range of -30 to +225°C. Crystallization temperature ($T_c$) and crystallization enthalpy ($H_c$) are determined from the cooling step, while melting temperature ($T_m$) and melting enthalpy ($H_m$) are determined from the second heating step. The crystallinity is calculated from the melting enthalpy by assuming an Hm-value of 209 J/g for a fully crystalline polypropylene (see Brandrup, J., Immergut, E. H., Eds. Polymer Handbook, 3rd ed. Wiley, New York, 1989; Chapter 3).

**The glass transition temperature Tg** is determined by dynamic mechanical analysis according to ISO 6721-7. The measurements are done in torsion mode on compression moulded samples (40x10x1 $mm^3$) between -100 °C and +150 °C with a heating rate of 2 °C/min and a frequency of 1 Hz.

**Grammage of the web**

The unit weight (grammage) of the webs in $g/m^2$ was determined in accordance with EN 29073-1 (1992) "Test methods for nonwovens - Determination of mass per unit area"

**Average fibre diameter in the web**

The number average fibre diameter was determined using scanning electron microscopy (SEM). A representative part of the web was selected and an SEM micrograph of suitable magnification was recorded, then the diameter of 20 fibres was measured and the number average calculated.

**Hydrohead**

The hydrohead or water resistance as determined by a hydrostatic pressure test is determined according to the WSP (wordwide strategic partners) standard test WSP 80.6 (09) as published in December 2009. This industry standard is in turn based on ISO 811:1981 and uses specimens of 100 $cm^2$ at 23°C with purified water as test liquid and a rate of increase of the water pressure of 10 cm/min.

**Air permeability**

The air permeability was determined in accordance with DIN ISO 9237.

**Examples**

A metallocene catalyst as described in example 1 of EP 1741725 A1 was used for the preparation of the propylene polymers of both comparative and inventive examples. The polymerization was carried out as detailed below.

Comparative example 4 (CE4) used for MB web production likewise is the commercial product HL512FB of Borealis, based on a Ziegler-Natta type catalyst and visbreaking. It has an MFR (230°C / 2.16kg) of 1200 g/10 min, an Mw of 78 kg/mol, an MWD of 3.8 and a Tm of 158°C.

**Table 1:** Preparation of the Inventive and Comparative Examples

| | | **IE1** | **CE1** | **CE2** | **CE3** |
|---|---|---|---|---|---|
| Prepolymerization | | | | | |
| Temperature | [°C] | 30 | 30 | 30 | 30 |
| Catalyst feed | [g/h] | 2.79 | 1.90 | 3.76 | 3.92 |
| res.time | [h] | 0.36 | 0.36 | 0.36 | 0.36 |
| **Loop (PP1)** | | | | | |
| Temperature | [°C] | 70 | 70 | 70 | 70 |
| Pressure | [kPa] | 5258 | 5414 | 5321 | 5338 |
| Split | [%] | 52 | 46 | 41 | 42 |
| H2/C3 ratio | [mol/kmol] | 0.59 | 0.34 | 0.31 | 0.32 |
| C2/C3 ratio | [mol/kmol] | 4.8 | 20.0 | 0.0 | 0.0 |
| $MFR_2$ | [g/10min] | 5815 | 1490 | 1200 | 1230 |
| XCS | [wt.-%] | 2.5 | 3.8 | 1.6 | 1.6 |
| C2 content | [wt-%] | 0.94 | 3.30 | 0 | 0 |
| Mw | [kg/mol] | 47 | 73 | 78 | 76 |
| MWD | [-] | 2.6 | 2.7 | 2.8 | 2.7 |
| | | | | | |
| **GPR 1 (PP2)*** | | | | | |
| Temperature | [°C] | 80 | 80 | 80 | 80 |
| Pressure | [kPa] | 2050 | 2663 | 2370 | 2063 |
| Split | [%] | 46.3 | 54.0 | 58.8 | 57.7 |
| H2/C3 ratio | [mol/kmol] | 9.2 | 9.1 | 7.3 | 13.5 |

(continued)

| | | | | | |
|---|---|---|---|---|---|
| **GPR 1 (PP2)*** | | | | | |
| C2/C3 ratio | [mol/kmol] | 65 | 43 | 0 | 84 |
| $MFR_2$* | [g/10min] | 157 | 667 | 1440 | 1004 |
| Mw* | [kg/mol] | 150 | 94 | 73 | 83 |
| | | | | | |
| XCS* | [wt.-%] | 2.8 | 2.2 | 1.9 | 6.0 |
| C2 content* | [wt-%] | 4.45 | 3.00 | 0 | 4.31 |
| | | | | | |
| **Final Product** | | | | | |
| | | | | | |
| C2 content | [wt-%] | 2.63 | 3.10 | 0 | 2.50 |
| XCS | [wt.-%] | 2.8 | 3.9 | 1.7 | 4.2 |
| | | | | | |
| Tm | [°C] | 140 | 134 | 150 | 154 |
| Tc | [°C] | 106 | 101 | 116 | 110 |
| $MFR_2$ | [g/10min] | 1028 | 965 | 1330 | 1093 |
| $\eta_0$(200°C) | [Pa.s] | 17 | 17 | 12.2 | 15.1 |
| Mw | [kg/mol] | 65 | 65 | 61 | 63 |
| MWD | [-] | 3.2 | 2.8 | 3.0 | 2.8 |
| * $MFR_2$, Mw, XCS and C2 content are calculated from Loop and Final product! | | | | | |

**Table 2:** Properties the melt blown web (MBW) at die-to-collector distance (DCD) of 200 mm (n.p. - spinning not possible)

| | | EX1 | CE1 | CE4 |
|---|---|---|---|---|
| at melt temperature 250°C | | | | |
| Fiber diameter | [μm] | 1.1 | 1.4 | 1.2 |
| Web weight | [g/m²] | 9.6 | 9.1 | 8.9 |
| Hydrohead | [cm $H_2O$] | 75.2 | 40.9 | 68.7 |
| Air permeability | [mm/s] | 762 | 1656 | 974 |
| | | | | |
| at melt temperature 270 °C | | | | |
| Fiber diameter | [μm] | 0.9 | 1.2 | n.p. |
| Web weight | [g/m²] | 9.1 | 9.1 | |
| Hydrohead | [cm $H_2O$] | 98.4 | 65.7 | |
| Air permeability | [mm/s] | 664 | 652 | |
| | | | | |
| at melt temperature 290 °C | | | | |
| Fiber diameter | [μm] | 0.8 | 1.1 | n.p. |

(continued)

| | | | | |
|---|---|---|---|---|
| at melt temperature 290 °C | | | | |
| Web weight | [g/m$^2$] | 9.1 | 9.1 | |
| Hydrohead | [cm $H_2O$] | 106.0 | 79.0 | |
| Air permeability | [mm/s] | 657 | 656 | |
| | | | | |
| at melt temperature 310 °C | | | | |
| Fiber diameter | [μm] | 0.7 | 0.9 | n.p. |
| Web weight | [g/m$^2$] | 9.1 | 9.1 | |
| Hydrohead | [cm $H_2O$] | 131.4 | 98.6 | |
| Air permeability | [mm/s] | 478 | 480 | |

**Claims**

1. Melt blown fiber (MBF) comprising a polypropylene composition (PC) comprising

   (a) a first polypropylene (PP1) having a melt flow rate $MFR_2$ (230 °C) measured according to ISO 1133 in the range of 1,500 to 10,000 g/10 min and
   (b) a second polypropylene (PP2),

   wherein the first polypropylene (PP1) has a higher melt flow rate than the second polypropylene (PP2),
   and wherein further
   the ratio of the melt flow rate $MFR_2$ measured according to ISO 1133 of the mixture (M) consisting of the first polypropylene (PP1) and the second polypropylene (PP2) to the melt flow rate $MFR_2$ (230 °C) measured according to ISO 1133 of the first polypropylene (PP1) [$MFR_2$(M)/$MFR_2$(PP1)] is in the range of 0.08 to 0.62,
   and wherein the amount of the first polypropylene (PP1) and the second polypropylene (PP2) together makes up at least 80 wt.-% of the melt blow fiber (MBF).

2. Melt blow fiber (MBF) according to claim 1, wherein the first polypropylene (PP1) has a weight average molecular weight Mw in the range of 35 to 75 kg/mol and/or a melt flow rate $MFR_2$ (230 °C) measured according to ISO 1133 of at least 1,000 g/10 min.

3. Melt blow fiber (MBF) according to claim 1 or 2, wherein the mixture (M) has a weight average molecular weight Mw in the range of 50 to 110 kg/mol.

4. Melt blow fiber (MBF) according to any one of the preceding claims, wherein the polypropylene composition (PC) has

   (a) a weight average molecular weight Mw in the range of 50 to 110 kg/mol; and/or
   (b) a melt flow rate $MFR_2$ (230 °C) measured according to ISO 1133 of at least 650 g/10min.

5. Melt blow fiber (MBF) according to any one of the preceding claims, wherein the amount of the first polypropylene (PP1) and the second polypropylene (PP2) together makes up at least 80 wt.-% of the polypropylene composition (PC).

6. Melt blow fiber (MBF) according to any one of the preceding claims, wherein the amount of the polypropylene composition (PC) makes up at least 80 wt.-% of the melt blow fiber (MBF).

7. Melt blow fiber (MBF) according to any one of the preceding claims, wherein the weight ratio between the first polypropylene (PP1) and the second polypropylene (PP2) [wt.-% (PP1)/wt.-% (PP2)] is in the range of 0.05 to 1.90.

8. Melt blow fiber (MBF) according to any one of the preceding claims, wherein the ratio of the weight average molecular weight Mw of the mixture (M) to the weight average molecular weight Mw of the first polypropylene (PP1)

[Mw(M)/Mw(PP1)] is in the range of 0.7 to 3.1.

**9.** Melt blow fiber (MBF) according to any one of the preceding claims, wherein

(a) the mixture (M) and/or the polypropylene composition (PC) has/have a molecular weight distribution (Mw/Mn) in the range of 2.0 to 10.0;
and/or
(b) the first polypropylene (PP1) has a molecular weight distribution (Mw/Mn) in the range of 2.0 to 8.0.

**10.** Melt blow fiber (MBF) according to any one of the preceding claims, wherein the mixture (M) and/or the polypropylene composition (PC) has/have

(a) a comonomer content in the range of 0.1 to 6.0 wt-%;
and/or
(b) a melting temperature Tm of at least 120 °C.

**11.** Melt blow fiber (MBF) according to any one of the preceding claims, wherein the polypropylene composition (PC) has a xylene cold soluble (XCS) fraction in the range of 1.0 to 10.0 wt.-%

**12.** Melt blow fiber (MBF) according to any one of the preceding claims, wherein the weight average molecular weight Mw of the second polypropylene (PP2) is higher than the weight average molecular weight Mw of the first polypropylene (PP1), preferably the weight average molecular weight Mw of the second polypropylene (PP2) is in the range of 90 to 215 kg/mol.

**13.** Melt blow fiber (MBF) according to any one of the preceding claims, wherein the second polypropylene (PP2) has a melt flow rate $MFR_2$ (230 °C) measured according to ISO 1133 in the range of 50 to 650 g/10 min and/or a comonomer content of more than 2.0 to 8.0 wt.-%.

**14.** Melt blow fiber (MBF) according to any one of the preceding claims, wherein the first polypropylene (PP1) has

(a) a comonomer content of at most 3.0 wt.-%;
and/or
(b) a xylene cold soluble (XCS) fraction in the range of 1.0 to 5.0 wt.-%.

**15.** Melt blow fiber (MBF) according to any one of the preceding claims, wherein the fibers have an average diameter of 0.3 to 5.0 μm.

**16.** Melt-blown web (MBW) comprising melt blow fibers (MBF) according to any one of the preceding claims.

**17.** Melt-blown web (MBW) according to claim 16 having a weight per unit area of at most 120 g/m$^2$.

**18.** Article comprising a melt-blown web (MBW) according to claim 16 or 17, said article is selected from the group consisting of filtration medium, diaper, sanitary napkin, panty liner, incontinence product for adults, protective clothing, surgical drape, surgical gown, and surgical wear.

**Patentansprüche**

**1.** Schmelz-geblasene Faser (MBF), umfassend eine Polypropylen-Zusammensetzung (PC), umfassend

(a) ein erstes Polypropylen (PP1) mit einer Schmelze-Fließ-Rate $MFR_2$ (230°C), gemessen gemäß ISO 1133, im Bereich von 1 500 bis 10 000 g/10 min und
(b) ein zweites Polypropylen (PP2),
wobei das erste Polypropylen (PP1) eine höhere Schmelze-Fließ-Rate als das zweite Polypropylen (PP2) aufweist,

und wobei weiterhin
das Verhältnis von der Schmelze-Fließ-Rate $MFR_2$, gemessen gemäß ISO 1133, von dem Gemisch (M), bestehend

aus dem ersten Polypropylen (PP1) und dem zweiten Polypropylen (PP2), zu der Schmelze-Fließ-Rate $MFR_2$ (230°C), gemessen gemäß ISO 1133, von dem ersten Polypropylen (PP1) [$MFR_2$(M)/$MFR_2$(PP1)] im Bereich von 0,08 bis 0,62 liegt, und wobei die Menge von dem ersten Polypropylen (PP1) und dem zweiten Polypropylen (PP2) zusammen mindestens 80 Gew.-% der schmelz-geblasenen Faser (MBF) ausmacht.

**2.** Schmelz-geblasene Faser (MBF) nach Anspruch 1, wobei das erste Polypropylen (PP1) ein gewichts-mittleres Molekular-Gewicht Mw im Bereich von 35 bis 75 kg/Mol und/oder eine Schmelze-Fließ-Rate $MFR_2$ (230°C), gemessen gemäß ISO 1133, von mindestens 1 000 g/10 min aufweist.

**3.** Schmelz-geblasene Faser (MBF) nach Anspruch 1 oder 2, wobei das Gemisch (M) ein gewichts-mittleres Molekular-Gewicht Mw im Bereich von 50 bis 110 kg/Mol aufweist.

**4.** Schmelz-geblasene Faser (MBF) nach einem der vorangehenden Ansprüche, wobei die Polypropylen-Zusammensetzung (PC) aufweist

(a) ein gewichts-mittleres Molekular-Gewicht Mw im Bereich von 50 bis 110 kg/Mol;
und/oder
(b) eine Schmelze-Fließ-Rate $MFR_2$ (230°C), gemessen gemäß ISO 1133, von mindestens 650 g/10 min.

**5.** Schmelz-geblasene Faser (MBF) nach einem der vorangehenden Ansprüche, wobei die Menge von dem ersten Polypropylen (PP1) und dem zweiten Polypropylen (PP2) zusammen mindestens 80 Gew.-% der Polypropylen-Zusammensetzung (PC) ausmacht.

**6.** Schmelz-geblasene Faser (MBF) nach einem der vorangehenden Ansprüche, wobei die Menge von der Polypropylen-Zusammensetzung (PC) mindestens 80 Gew.-% der schmelz-geblasenen Faser (MBF) ausmacht.

**7.** Schmelz-geblasene Faser (MBF) nach einem der vorangehenden Ansprüche, wobei das Gewichts-Verhältnis zwischen dem ersten Polypropylen (PP1) und dem zweiten Polypropylen (PP2) [Gew.-% (PP1)/Gew.-% (PP2)] im Bereich von 0,05 bis 1,90 liegt.

**8.** Schmelz-geblasene Faser (MBF) nach einem der vorangehenden Ansprüche, wobei das Verhältnis von dem gewichts-mittleren Molekular-Gewicht Mw von dem Gemisch (M) zu dem gewichts-mittleren Molekular-Gewicht Mw von dem ersten Polypropylen (PP1) [Mw(M)/Mw(PP1)] im Bereich von 0,7 bis 3,1 liegt.

**9.** Schmelz-geblasene Faser (MBF) nach einem der vorangehenden Ansprüche, wobei

(a) das Gemisch (M) und/oder die Polypropylen-Zusammensetzung (PC) eine Molekular-GewichtsVerteilung (Mw/Mn) im Bereich von 2,0 bis 10,0 aufweist / aufweisen;
und/oder
(b) das erste Polypropylen (PP1) eine MolekularGewichts-Verteilung (Mw/Mn) im Bereich von 2,0 bis 8,0 aufweist.

**10.** Schmelz-geblasene Faser (MBF) nach einem der vorangehenden Ansprüche, wobei das Gemisch (M) und/oder die Polypropylen-Zusammensetzung (PC) aufweist / aufweisen

(a) einen Comonomer-Gehalt im Bereich von 0,1 bis 6,0 Gew.-%;
und/oder
(b) eine Schmelz-Temperatur Tm von mindestens 120°C.

**11.** Schmelz-geblasene Faser (MBF) nach einem der vorangehenden Ansprüche, wobei die Polypropylen-Zusammensetzung (PC) eine in kaltem Xylol lösliche Fraktion (XCS) im Bereich von 1,0 bis 10,0 Gew.-% aufweist.

**12.** Schmelz-geblasene Faser (MBF) nach einem der vorangehenden Ansprüche, wobei das gewichts-mittlere Molekular-Gewicht Mw von dem zweiten Polypropylen (PP2) höher als das gewichts-mittlere Molekular-Gewicht Mw von dem ersten Polypropylen (PP1) ist, vorzugsweise das gewichts-mittlere Molekular-Gewicht Mw von dem zweiten Polypropylen (PP2) im Bereich von 90 bis 215 kg/Mol liegt.

**13.** Schmelz-geblasene Faser (MBF) nach einem der vorangehenden Ansprüche, wobei das zweite Polypropylen (PP2)

eine Schmelze-Fließ-Rate $MFR_2$ (230°C), gemessen gemäß ISO 1133, im Bereich von 50 bis 650 g/10 min und/oder einen Comonomer-Gehalt von mehr als 2,0 bis 8,0 Gew.-% aufweist.

**14.** Schmelz-geblasene Faser (MBF) nach einem der vorangehenden Ansprüche, wobei das erste Polypropylen (PP1) aufweist

(a) einen Comonomer-Gehalt von höchstens 3,0 Gew.-%;
und/oder
(b) eine in kaltem Xylol lösliche Fraktion (XCS) im Bereich von 1,0 bis 5,0 Gew.-%.

**15.** Schmelz-geblasene Faser (MBF) nach einem der vorangehenden Ansprüche, wobei die Fasern einen mittleren Durchmesser von 0,3 bis 5,0 μm aufweisen.

**16.** Schmelz-geblasene Bahn (MBW), umfassend schmelz-geblasene Fasern (MBF) nach einem der vorangehenden Ansprüche.

**17.** Schmelz-geblasene Bahn (MBW) nach Anspruch 16 mit einem Gewicht pro Einheits-Fläche von höchstens 120 $g/m^2$.

**18.** Gegenstand, umfassend eine Schmelz-geblasene Bahn (MBW) nach Anspruch 16 oder 17, wobei der Gegenstand ausgewählt ist aus der Gruppe, bestehend aus Filtrationsmedium, Windel, Damenbinde, Slipeinlage, Inkontinenz-Produkt für Erwachsene, Schutz-Kleidung, Operationstuch, Operationskittel und Operationskleidung.

## Revendications

**1.** Fibre soufflée à l'état fondu (MBF) comprenant une composition de polypropylène (PC) comprenant

(a) un premier polypropylène (PP1) présentant un indice de fluage $MFR_2$ (230°C), mesuré conformément à la norme ISO 1133, situé dans la plage allant de 1 500 à 10 000 g/10 min, et
(b) un deuxième polypropylène (PP2),

dans laquelle le premier polypropylène (PP1) présente un indice de fluage supérieur à celui du deuxième polypropylène (PP2),
et dans laquelle en outre
le rapport de l'indice de fluage $MFR_2$, mesuré conformément à la norme ISO 1133, du mélange (M) constitué du premier polypropylène (PP1) et du deuxième polypropylène (PP2), à l'indice de fluage $MFR_2$ (230°C), mesuré conformément à la norme ISO 1133, du premier polypropylène (PP1) [$MFR_2$(M) / $MFR_2$(PP1)], est situé dans la plage allant de 0,08 à 0,62,
et dans laquelle la quantité du premier polypropylène (PP1) et du deuxième polypropylène (PP2), pris ensemble, constitue au moins 80 % en poids de la fibre soufflée à l'état fondu (MBF).

**2.** Fibre soufflée à l'état fondu (MBF) selon la revendication 1, dans laquelle le premier polypropylène (PP1) présente une masse moléculaire moyenne en masse Mw située dans la plage allant de 35 à 75 kg/mol, et/ou un indice de fluage $MFR_2$ (230°C), mesuré conformément à la norme ISO 1133, d'au moins 1 000 g/10 min.

**3.** Fibre soufflée à l'état fondu (MBF) selon la revendication 1 ou 2, dans laquelle le mélange (M) présente une masse moléculaire moyenne en masse Mw située dans la plage allant de 50 à 110 kg/mol.

**4.** Fibre soufflée à l'état fondu (MBF) selon l'une quelconque des revendications précédentes, dans laquelle la composition de polypropylène (PC) présente

(a) une masse moléculaire moyenne en masse Mw située dans la plage allant de 50 à 110 kg/mol ;
et/ou
(b) un indice de fluage $MFR_2$ (230°C), mesuré conformément à la norme ISO 1133, d'au moins 650 g/10 min.

**5.** Fibre soufflée à l'état fondu (MBF) selon l'une quelconque des revendications précédentes, dans laquelle la quantité du premier polypropylène (PP1) et du deuxième polypropylène (PP2), pris ensemble, constitue au moins 80 % en poids de la composition de polypropylène (PC).

6. Fibre soufflée à l'état fondu (MBF) selon l'une quelconque des revendications précédentes, dans laquelle la quantité de la composition de polypropylène (PC) constitue au moins 80 % en poids de la fibre soufflée à l'état fondu (MBF).

7. Fibre soufflée à l'état fondu (MBF) selon l'une quelconque des revendications précédentes, dans laquelle le rapport en poids entre le premier polypropylène (PP1) et le deuxième polypropylène (PP2) [% pds (PP1) / % pds (PP2)] est situé dans la plage allant de 0,05 à 1,90.

8. Fibre soufflée à l'état fondu (MBF) selon l'une quelconque des revendications précédentes, dans laquelle le rapport de la masse moléculaire moyenne en masse Mw du mélange (M) sur la masse moléculaire moyenne en masse Mw du premier polypropylène (PP1) [Mw(M) / Mw(PP1)] est situé dans la plage allant de 0,7 à 3,1.

9. Fibre soufflée à l'état fondu (MBF) selon l'une quelconque des revendications précédentes, dans laquelle

(a) le mélange (M) et/ou la composition de polypropylène (PC) présente(nt) une distribution des masses moléculaires (Mw/Mn) située dans la plage allant de 2,0 à 10,0 ;
et/ou
(b) le premier polypropylène (PP1) présente une distribution des masses moléculaires (Mw/Mn) située dans la plage allant de 2,0 à 8,0.

10. Fibre soufflée à l'état fondu (MBF) selon l'une quelconque des revendications précédentes, dans laquelle le mélange (M) et/ou la composition de polypropylène (PC)

(a) possède(nt) une teneur en comonomères située dans la plage allant de 0,1 à 6,0 % en poids ;
et/ou
(b) présente (nt) un point de fusion Tm d'au moins 120°C.

11. Fibre soufflée à l'état fondu (MBF) selon l'une quelconque des revendications précédentes, dans laquelle la composition de polypropylène (PC) possède une fraction soluble dans le xylène froid (XCS) située dans la plage allant de 1,0 à 10,0 % en poids.

12. Fibre soufflée à l'état fondu (MBF) selon l'une quelconque des revendications précédentes, dans laquelle la masse moléculaire moyenne en masse Mw du deuxième polypropylène (PP2) est supérieure à la masse moléculaire moyenne en masse du premier polypropylène (PP1), de préférence la masse moléculaire moyenne en masse Mw du deuxième polypropylène (PP2) est située dans la plage allant de 90 à 215 kg/mol.

13. Fibre soufflée à l'état fondu (MBF) selon l'une quelconque des revendications précédentes, dans laquelle le deuxième polypropylène (PP2) présente un indice de fluage $MFR_2$ (230°C), mesuré conformément à la norme ISO 1133, situé dans la plage allant de 50 à 650 g/10 min, et/ou possède une teneur en comonomères allant de plus de 2,0 à 8,0 % en poids.

14. Fibre soufflée à l'état fondu (MBF) selon l'une quelconque des revendications précédentes, dans laquelle le premier polypropylène (PP1) possède

(a) une teneur en comonomères d'au plus 3,0 % en poids ;
et/ou
(b) une fraction soluble dans le xylène froid (XCS) située dans la plage allant de 1,0 à 5,0 % en poids.

15. Fibre soufflée à l'état fondu (MBF) selon l'une quelconque des revendications précédentes, laquelle fibre présente un diamètre moyen de 0,3 à 5,0 μm.

16. Toile soufflée à l'état fondu (MBW) comprenant des fibres soufflées à l'état fondu (MBF) selon l'une quelconque des revendications précédentes.

17. Toile soufflée à l'état fondu (MBW) selon la revendication 16, présentant une masse par unité de surface d'au plus 120 g/$m^2$.

18. Article comprenant une toile soufflée à l'état fondu (MBW) selon la revendication 16 ou 17, ledit article étant choisi dans l'ensemble constitué par un milieu de filtration, une couche, une serviette hygiénique, un protège-slip, un

produit pour adultes incontinents, un vêtement protecteur, un champ chirurgical, une blouse chirurgicale, et un vêtement chirurgical.

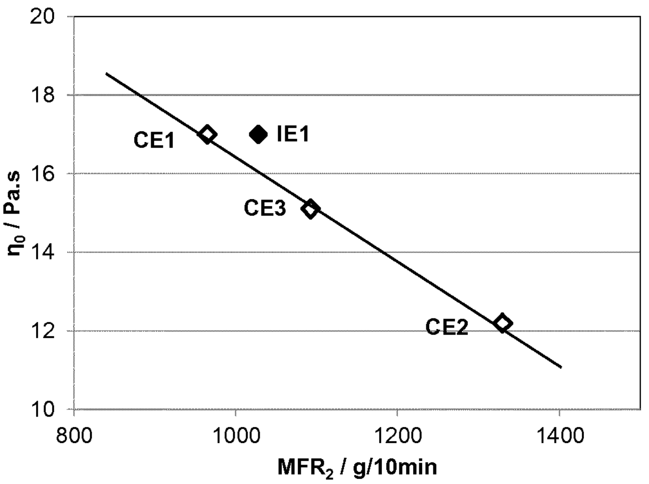


**Fig. 1:** Correlation between the MFR (230°C / 2.16 kg) and zero shear viscosity for inventive and comparative examples

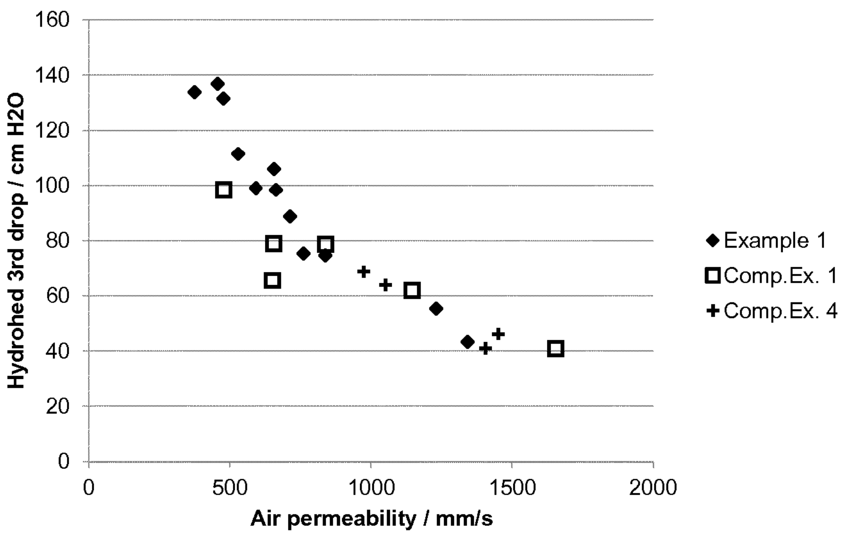


**Fig. 2:** Melt-blown web performance of inventive and comparative examples

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 2325248 A
- US 20050165173 A
- WO 0148041 A
- EP 0887379 A
- WO 9212182 A
- WO 2004000899 A
- WO 2004111095 A
- WO 9924478 A
- WO 9924479 A
- WO 0068315 A
- WO 03051934 A
- WO 2006069733 A
- WO 0148034 A
- EP 1741725 A1


### Non-patent literature cited in the description


- Glossary of basic terms in polymer science. *IUPAC recommendations,* 1996
- **RESCONI et al.** *Chemical Reviews,* 2000, vol. 100 (4), 1263
- **HANS ZWEIFEL.** Plastic Additives Handbook. 2009, 1141-1190
- **ZHOU, Z. ; KUEMMERLE, R. ; QIU, X. ; REDWINE, D. ; CONG, R. ; TAHA, A. ; BAUGH, D. ; WINNIFORD, B.** *J. Mag. Reson.,* 2007, vol. 187, 225
- **BUSICO, V. ; CARBONNIERE, P. ; CIPULLO, R. ; PELLECCHIA, R. ; SEVERN, J. ; TALARICO, G.** *Macromol. Rapid Commun.,* 2007, vol. 28, 1128
- **CHENG, H. N.** *Macromolecules,* 1984, vol. 17, 1950
- **L. RESCONI ; L. CAVALLO ; A. FAIT ; F. PIEMONTESI.** *Chem. Rev.,* 2000, vol. 100 (4), 1253
- **W-J. WANG ; S. ZHU.** *Macromolecules,* 2000, vol. 33, 1157
- **WANG, W-J. ; ZHU, S.** *Macromolecules,* 2000, vol. 33, 1157
- **KAKUGO, M. ; NAITO, Y. ; MIZUNUMA, K. ; MIYATAKE, T.** *Macromolecules,* 1982, vol. 15, 1150
- Polymer Handbook. Wiley, 1989